Europäisches Patentamt

(19) European Patent Office

Office européen des brevets

(11) Publication number: **0 191 516**
**B1**

# (12) EUROPEAN PATENT SPECIFICATION

(45) Date of publication of the patent specification: 05.07.89

(51) Int. Cl.⁴: **F 03 B 17/02**

(21) Application number: **86200096.5**

(22) Date of filing: **21.01.86**

(54) Energy storage and recovery.

(30) Priority: **15.02.85 NL 8500435**

(43) Date of publication of application:
**20.08.86 Bulletin 86/34**

(45) Publication of the grant of the patent:
**05.07.89 Bulletin 89/27**

(84) Designated Contracting States:
**AT DE FR GB NL SE**

(56) References cited:
**DE-A- 2 513 479**
**DE-C- 215 657**
**US-A- 4 086 765**

(73) Proprietor: SHELL INTERNATIONALE RESEARCH MAATSCHAPPIJ B.V., Carel van Bylandtlaan 30, NL-2596 HR Den Haag (NL)

(72) Inventor: Verschuur, Eke, Badhuisweg 3, NL-1031 CM Amsterdam (NL)
Inventor: Quist, Bernardus Bastiaan, Badhuisweg 3, NL-1031 CM Amsterdam (NL)
Inventor: Holscher, Hugo, Badhuisweg 3, NL-1031 CM Amsterdam (NL)

(74) Representative: Aalbers, Onno et al, P.O. Box 302, NL-2501 CH The Hague (NL)

## Description

The invention relates to a system for the storage and recovery of energy comprising an upper storage space, a lower storage space situated below the upper storage space, a connecting line between the lower part of the upper storage space and the lower part of the lower storage space, and a pump/turbine unit.

Such a system is widely known DE-C-215 657. In the known system the upper storage space consists of a lake at a high location and the lower storage space consists of a lake at a lower location or of an underground cavern. Moreover, in the known system the pump/turbine unit is installed in the connecting line and located at the same height as the lower storage space in order, during normal operation, to be able to pump a liquid from the lower storage space to the upper storage space, or to be driven by the liquid flowing back from the upper storage space to the lower storage space.

The pump of such a system is usually driven by an electric motor connected by an electric line to an electric network, and the turbine then drives an electric generator which is also connected by an electric line to an electric network. Such a system enables an excess of electrical energy to be used to pump the liquid to the upper storage space, while a shortage of electrical energy can be supplemented by electrical energy generated by the electric genertor driver by the turbine, which is itself driven by liquid flowing back to the lower storage space.

Since the pump/turbine unit is installed near the lower storage space, it is necessary in the case of the lower storage space being an underground cavern, in addition to this storage space to make a separate space for the pump/turbine unit and to make a separate shaft through which to run an electric line of sufficient size to carry the electrical energy to the electric motor and from the electric generator. This makes such a system extremely costly.

The object of the invention is to overcome this drawback.

Therefore, the system for the storage and recovery of energy according to the invention is characterized by an upper storage space at least partly filled with fluid having a relatively low density (the lighter fluid), a lower storage space located below the upper storage space and at least partly filled with fluid having a relatively high density (the heavier fluid), which fluids are hardly or not at all miscible with each other, a connecting line filled with heavier fluid and located between the lower part of the upper storage space and the lower part of the lower storage space, and a pump/turbine unit at approximately the same height as, or above, the upper storage space, the pump/turbine unit being connected through means of interrupting the flow of the lighter fluid to the upper part of the upper storage space and to the upper part of the lower storage space in order, during normal operation, to be able to pump lighter fluid from the upper storage space to the lower storage space or to be driven by lighter fluid flowing from the lower storage space to the upper storage space.

In an advantageous embodiment of the invention, the lower storage space is an underground space. This can be formed in any hard rock. A particularly suitable rock is rock salt. This has the advantage that the underground space can be formed by dissolving the salt.

In the case of very large volumes, it may be more advantageous if the upper storage space is also an underground space. In that case, it is favourable to form both underground storage spaces in rock salt.

The invention also relates to a process for the storage and recovery of energy with the aid of the system according to the invention, characterized by the steps of

a) pumping lighter fluid from the upper storage space to the lower storage space, which is at least partly filled with heavier fluid, with the aid of the pump/turbine unit, resulting in heavier fluid being displaced out of the lower storage space and flowing via the connecting line to the upper storage space;

b) interrupting the pumping of lighter fluid;

c) allowing lighter fluid, displaced from out of the lower storage space by heavier fluid flowing back from the upper storage space via the connecting line, to flow back to the upper storage space;

d) letting the returning lighter fluid drive the pump/turbine unit; and

e) interrupting the return flow of the lighter fluid.

It will be appreciated that the words «pump» and «turbine» used in the specification and the claims can also refer to a «compressor» and an «expander» respectively.

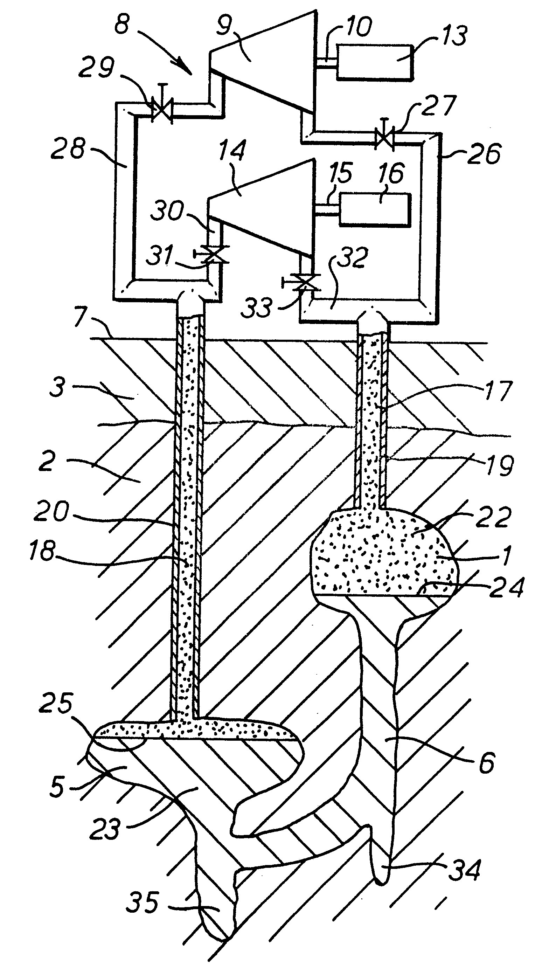

By way of example, the invention will now be discussed in more detail with reference to the figure in which a partial cross-section of the system is shown schematically.

The system for storing and recovering energy comprises an upper underground storage space 1 formed in a salt dome 2 situated beneath an earth layer 3, a lower underground storage space 5 situated in the salt dome 2 below the upper storage space 1, and a connecting line 6 in the form of a partly curved leached-out bore-hole between the lower part of the upper storage space 1 and the lower part of the lower storage space 5.

The system further comprises a pump/turbine unit 8 located at ground level 7 above the upper storage space 1, the pump/turbine unit consisting of a pump 9 connected by a shaft 10 to an electric motor 13, and a turbine 14 connected by a shaft 15 to an electric generator 16.

The pump/turbine unit 8 is connected to the upper part of the upper storage space 1 by first line 17, and to the upper part of the lower storage space by a second line 18. The first line 17 comprises a bore-hole provided with a tube 19, and the second line 18 comprises a bore-hole provided with a tube 20.

The electric motor 13 is connected by an electric line (not shown) to an electric network (not shown) in order to draw electrical energy from it, and the electric generator 16 is connected by an electric line (not shown) to the electric network in order to supply electrical energy to it.

The upper storage space 1 is at least partly filled with a fluid having a relatively low density (the lighter fluid), viz. brine 22 having a density of $1200$ kg/m$^3$, and the lower storage space 5 with a fluid having a relatively high density (the heavier fluid), viz. drilling mud 23 having a density of $1850$ kg/m$^3$. The lighter fluid is also to be found in the first line 17, the pump/turbine unit 8, the second line 18 and the upper part of the lower storage space 5; and the heavier fluid is also to be found in the connecting line 6 and in the lower part of the upper storage space 1. The numeral 24 refers to the interface between the two fluids in the upper storage space 1 and the numeral 25 to the interface between the two fluids in the lower storage space 5.

The inlet of the pump 9 is connected to the first line 17 by means of a supply pipe 26 provided with a shut-off valve 27, and the outlet of the pump 9 is connected to the second line 18 by a discharge pipe 28 provided with a shut-off valve 29.

The inlet of the turbine 14 is connected to the second line 18 by means of a supply pipe 30 provided with a shut-off valve 31, and the outlet of the turbine 14 is connected to the first line 17 by a discharge pipe 32 provided with a shut-off valve 33.

In the stationary situation shown in the figure, the shut-off valves 27, 29, 31 and 33 are closed.

If there is an excess of electrical energy, this is fed to the electric motor 13 to drive the pump 9, and the shut-off valves 27 and 29 are opened so that the lighter fluid is pumped from the upper storage space 1 to the lower storage space 5 via the first line 17, the pump 9 and the second line 18. This results in the heavier fluid being displaced out of the lower storage space 5 and flowing via the connecting line 6 to the upper storage space 1. This will cause the interface 24 to rise.

When the quantity of heavier fluid in the upper storage space 1 is sufficiently large, the pumping of the lighter fluid will be interrupted by stopping the pump 9 and closing the shut-off valves 27 and 29.

When it is necessary to recover the stored energy, for example in the case of a large demand for electrical energy, just the shut-off valves 31 and 33 will be opened. Lighter fluid, driven by heavier fluid, will flow back from the lower storage space 5 to the upper storage space 1 via the second line 18, the turbine 14 and the first line 17, and heavier fluid will flow back from the upper storage space 1 via the connecting line 6 to the lower storage space 5. The returning lighter fluid causes the turbine 14 to move, which drives the electric generator 16, and this in turn generates electrical energy which can be fed into the electric network.

When sufficient heavier fluid has flowed out of the upper storage space 1, the return flow of the lighter fluid is interrupted by closing the shut-off valves 31 and 33. The system will then again be in its stationary situation. When interrupting the return flow of the lighter fluid, the fluid pressure near the shut-off valve 31 and the height difference between the interfaces 24 and 25 must be chosen such that the fluid pressure near the shut-off valve 33 remains slightly above atmospheric pressure, so that when lighter fluid is pumped out of the upper storage space 1, the supply of lighter fluid to the pump remains assured.

It is subsequently possible to repeat the process of storing energy and then recovering it according to the above-described process.

To prevent lumps of salt from the roofs of the storage spaces 1 and 5 blocking the connecting line 6, the system is further provided with catch-pits 34 and 35.

In the system described above, the pump and turbine are separate, but the pump/turbine unit can also consist of a hydraulic machine which can function both as pump (or compressor) and as turbine, which hydraulic machine is connected to an electric machine which can function both as motor and generator.

To prevent the lighter fluid from getting too hot during the operation of the system, this can be provided with a heat exchanger (not shown) to cool the lighter fluid.

The upper storage space can also be situated at ground level, for example in the form of an above-ground storage tank or a lake. In that case, the above-ground pump/turbine unit will be at about the same height as the upper storage space.

The lighter fluid can also be a liquid other than brine, for example liquefied petroleum gas or oil. Water can also be used, especially if the underground part of the system is situated in a rock which is not affected by water.

A very great difference between the density of the lighter fluid and that of the heavier fluid is achieved if the lighter fluid is a gas, such as nitrogen or carbon dioxide.

The heavier fluid is preferably a liquid, such as brine, drilling mud or a dispersion of sand or fly-ash in brine.

In an advantageous embodiment of the invention, the fluids are hardly or not at all soluble in each other. However, to prevent mixing, intermediate layers can also be introduced between the fluids at the interfaces 24 and 25. The density of the material of the intermediate layer is higher than the density of the lighter fluid and lower than the density of the lighter fluid, and the material should be such that the material and each of the fluids are hardly or not at all soluble in each other.

A suitable material is freon: the trade name for a group of substances consisting of ethane or methane in which one or more hydrogen atoms are replaced by fluorine or chlorine. Another suitable material is a mixture of diesel oil and freon, or a solution of polyvinyl chloride in a suitable solvent for example tetrahydrofurane or methyl chloride.

The material of the intermediate layer can also be a slurry, for example particles of polyvinyl chloride in diesel oil, or heamatite in diesel oil with oleic acid as surfactant to cause the haematite particles to be wetted.

The intermediate layer can also consist of a layer of polyvinyl chloride particles.

A suitable system for storing and recovering 100 MW of electrical power would have underground storage spaces of about $5 \times 10^5$ m$^3$ to $6 \times 10^5$ m$^3$, the height difference between the storage spaces being about 1000 m and the density of the lighter fluid being 1200 kg/m$^3$ and that of the heavier fluid being 1850 kg/m$^3$. In order to reduce hydraulic losses, the areas of the passageways of the connecting line and of the first and second line should by as large as possible, at least 3 m$^2$.

Instead of an electric motor 13 to drive the pump 9, the system can also comprise a turbine (not shown) to drive the pump 9. The turbine is itself driven by a compressed gas, for example natural gas.

As already discussed in the foregoing, in an advantageous embodiment of the invention a gas such as air and a liquid such as brine may be used as the lighter fluid and heavier fluid respectively.

When using an expander, it appears that the volume of the air flowing from the lower storage space to the upper storage space has considerably increased at the low pressure outlet of the expander.

Subsequently, part of this expanded air can be used in a conventional compressed air energy storage unit located at the earth's surface.

Another advantageous possibility is to store (part of) the expanded air in a second set of underground storage spaces.

In this manner, a compensation of gas expansion is provided.

## Claims

1. A system for the storage and recovery of energy characterized by an upper storage space at least partly filled with fluid having a relatively low density (the lighter fluid), a lower storage space located below the upper storage space and at least partly filled with fluid having a relatively high density (the heavier fluid), which fluids are hardly or not at all miscible with each o ther, a connecting line filled with heavier fluid and located between the lower part of the upper storage space and the lower part of the lower storage space, and a pump/turbine unit at approximately the same height as, or above, the upper storage space, the pump/turbine unit being connected through means for interrupting the flow of the lighter fluid to the upper part of the upper storage space and to the upper part of the lower storage space in order, during normal operation, to be able to pump lighter fluid from the upper storage space to the lower storage space or to be driven by lighter fluid flowing from the lower storage space to the upper storage space.

2. The system as claimed in claim 1, characterized in that the lower storage space is an underground space.

3. The system as claimed in claim 2, characterized in that the upper storage space is an underground space.

4. The system as claimed in claim 2 or 3, characterized in that the pump/turbine unit is situated above the upper storage space.

5. The system as claimed in any one of claims 1–3, characterized in that the pump/turbine unit is located at or near ground level.

6. The system as claimed in any one of claims 1–5, characterized in that the lighter fluid is a gas, for example carbon dioxide or nitrogen.

7. The system as claimed in any one of claims 1–5, characterized in that the lighter fluid is a liquid, for example liquefied petroleum gas, oil, water or brine.

8. The system as claimed in any one of claims 1–7, characterized in that the heavier fluid is a liquid, for example brine, drilling mud, or a dispersion of sand or fly-ash in brine.

9. The system as claimed in any one of claims 1–8, characterized in that the fluids are separated from each other by an intermediate layer of a material with a density lying between the densities of the fluids in which material the fluids can hardly or not at all dissolve.

10. The system as claimed in claim 9, characterized in that the material of the intermediate layer is a liquid, for example freon, a mixture of diesel oil and freon, or a solution of polyvinyl chloride in a suitable solvent, for example tetrahydrofurane or methyl chloride.

11. The system as claimed in claim 9, characterized in that the material of the intermediate layer is a slurry, for example particles of polyvinyl chloride in diesel oil, or haematite in diesel oil with oleic acid.

12. The system as claimed in claim 9, characterized in that the intermediate layer consists of particles of polyvinyl chloride.

13. A method for the storage and recovery of energy with the aid of the system as claimed in any one of claims 1–12, characterized by the steps of

a) pumping lighter fluid from the upper storage space to the lower storage space, which is at least partly filled with heavier fluid, with the aid of the pump/turbine unit, resulting in heavier fluid being displaced out of the lower storage space and flowing via the connecting line to the upper storage space;

b) interrupting the pumping of lighter fluid;

c) allowing lighter fluid, displaced from out of the lower storage space by heavier fluid flowing back from the upper storage space via the connecting line, to flow back to the upper storage space;

d) letting the returning lighter fluid drive the pump/turbine unitd; and

e) interrupting the return flow of the lighter fluid.

## Patentansprüche

1. System zur Speicherung und Rückgewinnung von Energie, gekennzeichnet durch einen oberen Speicherraum, der zumindest teilweise mit einem Fluid mit einer verhältnismässig niedrigen Dichte (dem leichteren Fluid) gefüllt ist, einen unteren, unterhalb des oberen Speicherraumes angeordneten Speicherraum, der zumindest teilweise mit einem Fluid mit einer verhältnismässig hohen Dichte (dem schwereren Fluid) gefüllt ist, welche Fluide kaum oder überhaupt nicht miteinander mischbar sind, eine mit schwererem Fluid gefüllte und zwischen dem Unterteil des oberen Speicherraumes und dem Unterteil des unteren Speicherraumes angeordnete Verbindungsleitung, und eine Pumpen/Turbinen-Einheit auf ungefähr der gleichen Höhe wie der obere Speicherraum, oder darüber, wobei die Pumpen/Turbinen-Einheit über Mittel zum Unterbrechen der Strömung des leichteren Fluids mit dem Oberteil des oberen Speicherraumes und dem Oberteil des unteren Speicherraumes verbunden ist, damit im Normalbetrieb die Einheit leichteres Fluid aus dem oberen Speicherraum zum unteren Speicherraum pumpen kann oder die Einheit durch aus dem unteren Speicherraum zum oberen Speicherraum strömendes leichteres Fluid angetrieben werden kann.

2. System nach Anspruch 1, dadurch gekennzeichnet, dass der untere Speicherraum ein unterirdischer Raum ist.

3. System nach Anspruch 2, dadurch gekennzeichnet, dass der obere Speicherraum ein unterirdischer Raum ist.

4. System nach Anspruch 2 oder 3, dadurch gekennzeichnet, dass die Pumpen/Turbinen-Einheit oberhalb des oberen Speicherraumes angeordnet ist.

5. System nach einem der Ansprüche 1 bis 3, dadurch gekennzeichnet, dass die Pumpen/Turbinen-Einheit auf oder nahe dem Bodenniveau angeordnet ist.

6. System nach einem der Ansprüche 1 bis 5, dadurch gekennzeichnet, dass das leichtere Fluid ein Gas ist, beispielsweise Kohlendioxid oder Stickstoff.

7. System nach einem der Ansprüche 1 bis 5, dadurch gekennzeichnet, dass das leichtere Fluid eine Flüssigkeit ist, beispielsweise verflüssigtes Erdgas, Öl, Wasser oder Salzsole.

8. System nach einem der Ansprüche 1 bis 7, dadurch gekennzeichnet, dass das schwerere Fluid eine Flüssigkeit ist, beispielsweise Salzsole, Bohrschlamm oder eine Dispersion von Sand oder Flugasche in Salzsole.

9. System nach einem der Ansprüche 1 bis 8, dadurch gekennzeichnet, dass die Fluide voneinander durch eine Zwischenschicht aus einem Material mit einer zwischen den Dichten der Fluide liegenden Dichte getrennt sind, in welchem Material die Fluide kaum oder überhaupt nicht löslich sind.

10. System nach Anspruch 9, dadurch gekennzeichnet, dass das Material der Zwischenschicht eine Flüssigkeit ist, beispielsweise Freon, ein Gemisch aus Dieselöl und Freon, oder eine Lösung von Polyvinylchlorid in einem geeigneten Lösungsmittel, beispielsweise Tetrahydrofuran oder Methylchlorid.

11. System nach Anspruch 9, dadurch gekennzeichnet, dass das Material der Zwischenschicht eine Aufschlämmung ist, beispielsweise Polyvinylchloridteilchen in Dieselöl oder Hämatit in Dieselöl mit Ölsäure.

12. System nach Anspruch 9, dadurch gekennzeichnet, dass die Zwischenschicht aus Polyvinylchloridteilchen besteht.

13. Verfahren zur Speicherung und Rückgewinnung von Energie mit Hilfe des Systems, wie in einem der Ansprüche 1 bis 12 beansprucht, gekennzeichnet durch die Stufen:

a) Pumpen von leichterem Fluid aus dem oberen Speicherraum zu dem unteren Speicherraum, der zumindest teilweise mit schwererem Fluid gefüllt ist, mit Hilfe der Pumpen/Turbinen-Einheit, was zu einem Verdrängen von schwererem Fluid aus dem unteren Speicherraum und zu einem Strömen des schwereren Fluids über die Verbindungsleitung zum oberen Speicherraum führt;

b) Unterbrechen des Pumpens von leichterem Fluid;

c) Zurückströmenlassen von leichterem, aus dem unteren Speicherraum durch aus dem oberen Speicherraum über die Verbindungsleitung zurückströmendes schwereres Fluid verdrängtem leichterem Fluid zum oberen Speicherraum;

d) Antreiben der Pumpen/Turbinen-Einheit mit dem zurückströmenden leichteren Fluid; und

e) Abbrechen des Zurückströmens des leichteren Fluids.

## Revendications

1. Un système pour le stockage et la récupération d'énergie caractérisé par un espace supérieur de stockage au moins partiellement rempli d'un fluide ayant une masse volumique relativement faible (le fluide léger), un espace inférieur de stockage situé au-dessous de l'espace supérieur de stockage et au moins partiellement rempli d'un fluide ayant une masse volumique relativement forte (le fluide lourd), ces fluides n'étant que peu ou n'étant pas du tout miscibles l'un avec l'autre, un conduit de jonction rempli de fluide lourd et situé entre la partie inférieure de l'espace supérieur de stockage et la partie inférieure de l'espace inférieur de stockage, et une unité pompe/turbine approximativement à la même hauteur ou plus haut que l'espace supérieur de stockage, l'unité pompe/turbine étant connectée par des moyens pour interrompre l'écoulement du fluide léger vers la partie supérieure de l'espace supérieur de stockage et vers la partie supérieure de l'espace inférieur de stockage de manière que, en fonctionnement normal, elle puisse refouler du fluide léger de l'espace supérieur de stockage à l'espace inférieur de stockage ou être entraînée par le fluide léger s'écoulant de l'espace inférieur de stockage à l'espace supérieur de stockage.

2. Le système selon la revendication 1, caractérisé en ce que l'espace inférieur de stockage est un espace souterrain.

3. Le système selon la revendication 2, caractérisé en ce que l'espace inférieur de stockage est un espace souterrain.

4. Le système selon la revendication 2 ou 3, caractérisé en ce que l'unité pompe-turbine est située au-dessus de l'espace supérieur de stockage.

5. Le système selon l'une quelconque des revendications 1–3, caractérisé en ce que l'unité pompe/turbine est située au niveau ou près du niveau du sol.

6. Le système selon l'une quelconque des revendications 1–5, caractérisé en ce que le fluide léger est un gaz, par exemple de l'anhydride carbonique ou de l'azote.

7. Le système selon l'une quelconque des revendications 1–5, caractérisé en ce que le fluide léger est un liquide, par exemple du gaz de pétrole liquéfié, de l'huile, de l'eau ou de la saumure.

8. Le système selon l'une quelconque des revendications 1–7, caractérisé en ce que le fluide lourd est un liquide, par exemple de la saumure, de la boue de forage ou une dispersion de sable ou de cendre volante dans de la saumure.

9. Le système selon l'une quelconque des revendications 1–8, caractérisé en ce que les fluides sont séparés l'un de l'autre par une couche intermédiaire d'une matière ayant une masse volumique comprise entre les masses volumiques des fluides, matière dans laquelle les fluides ne peuvent que très peu ou ne peuvent pas du tout se dissoudre.

10. Le système selon la revendication 9, caractérisé en ce que la matière de la couche intermédiaire est un liquide, par exemple du fréon, un mélange de gasoil et de fréon, ou une solution de chlorure de polyvinyle dans un solvant approprié, par exemple du tétrahydrofuranne ou du chlorure de méthyle.

11. Le système selon la revendication 9, caractérisé en ce que la matière de la couche intermédiaire est une bouillie, par exemple de particules de chlorure de polyvinyle dans du gasoil, ou d'hématite dans du gasoil avec de l'acide oléique.

12. Le système selon la revendication 9, caractérisé en ce que la couche intermédiaire consiste en particules de chlorure de polyvinyle.

13. Un procédé de stockage et de récupération d'énergie à l'aide d'un système selon l'une quelconque des revendications 1–12, caractérisé par les étapes consistant à

a) refouler du fluide léger de l'espace supérieur de stockage à l'espace inférieur de stockage, qui est au moins partiellement rempli de fluide lourd, à l'aide de l'unité pompe/turbine, avec le résultat que du fluide lourd est déplacé de l'espace inférieur de stockage et s'écoule par le conduit de jonction vers l'espace supérieur de stockage;

b) interrompre le pompage du fluide léger;

c) laisser le fluide léger, déplacé de l'espace inférieur de stockage par le fluide lourd refluant de l'espace inférieur de stockage par le conduit de jonction, revenir l'espace supérieur de stockage;

d) laisser le fluide léger qui revient entraîner l'unité pompe/turbine; et

e) interrompre l'écoulement en retour du fluide léger.

1/1